(19) Europäisches Patentamt
European Patent Office
Office européen des brevets

(11) EP 3 430 098 B1

(12) EUROPEAN PATENT SPECIFICATION

(45) Date of publication and mention of the grant of the patent:
**29.09.2021 Bulletin 2021/39**

(21) Application number: **17710005.4**

(22) Date of filing: **14.03.2017**

(51) Int Cl.:
***C09D 127/08*** *(2006.01)* ***C08K 3/32*** *(2006.01)*
***C09D 5/08*** *(2006.01)*

(86) International application number:
**PCT/EP2017/056033**

(87) International publication number:
**WO 2017/157963 (21.09.2017 Gazette 2017/38)**

(54) **WATER-BASED ANTI-CORROSION COATING COMPOSITION**

WÄSSRIGE KORROSIONSSCHUTZ BESCHICHTUNGSZUSAMMENSETZUNG

COMPOSITION DE REVÊTEMENT AQUEUSE ANTI-CORROSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2016 EP 16305299**

(43) Date of publication of application:
**23.01.2019 Bulletin 2019/04**

(73) Proprietor: **Solvay SA**
**1120 Bruxelles (BE)**

(72) Inventors:
- **PAN, Yanzhong**
  **7340 Colfontaine (BE)**
- **CHAPOTOT, Agnès**
  **39500 Tavaux (FR)**
- **VANDERVEKEN, Yves**
  **3001 Leuven (BE)**

(74) Representative: **Benvenuti, Federica**
**Solvay S.A.**
**Intellectual Assets Management**
**Rue de Ransbeek, 310**
**1120 Bruxelles (BE)**

(56) References cited:
**EP-A2- 0 125 815**
**WO-A2-2012/074617**
**JP-A- H07 145 340**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 430 098 B1

## Description

## Technical Field

The present invention relates to aqueous coating composition and methods used to form protective coatings on substrates and in particular metal containing substrates. More particularly, the present invention relates to coating compositions, methods, and coating systems involving an aqueous coating composition, which can be applied as direct-to-metal coat at high coating thickness providing outstanding finish and corrosion protection.

## Background Art

Aqueous or water-based coating compositions for use in the protective coating of substrates, for example in the protection of ferrous metals against corrosion or rusting, are well known.

Particularly advantageous are compositions which do not require any "baking" period for curing/hardening at temperature substantially above ambient temperature, as significant potential use of protective coating compositions is their application to structures of very large size, including storage tanks, large pipe-work components, architectural elements (bridges' parts, buildings' elements), and containers used for intermodal cargo, which represent a particularly demanding field of use.

Intermodal cargo containers (also referred to as freight or shipping containers) are reusable transport and storage units for moving products and raw materials between locations, including between countries. Intermodal cargo containers are standardized to facilitate intermodal transport such as among marine transport, freight train transport, and freight truck transport.

Cargo containers experience harsh, corrosive environments during their service life. When shipped by sea, the containers are exposed to the corrosive effects of salt water. When exposed to nature, the containers must withstand wind, sun, hail, rain, sand, heat, and the like. Containers exposed to the sun can bake to temperatures of 80°C or even higher.

Accordingly, cargo containers must be made in a way that allows the containers to survive this exposure for a reasonable service life. As one strategy, containers can be made from corrosion resistant materials such as stainless steel, weather steel (also known as weathering steel, COR-TEN brand steel). Even when made from such corrosion resistant materials, it still generally required to further apply durable, abrasion resistant, corrosion resistant coatings on the containers as further protection against degradation.

Historically, mostly solvent-based coating systems have been used to protect cargo containers as many proposed water-based systems have been unable to satisfy the applicable performance demands and/or standards. In particular, waterborne coatings are difficult to apply in widely varying humidity conditions, as an applied film of the coating stays wet for a longer period of time and/or does not dry uniformly, and are generally limited in the maximum coating thickness which can be achieved through each application step, necessitating hence multiple applications, requiring long intermediate drying/coalescing steps.

Within this frame, WO 2007/079757 (PHOENIX INTERNATIONAL A/S) 19.07.2007 discloses a water-based primer and a method for protecting iron or steel materials against corrosion using the said primer. The water-based primer comprises a binder of one or more acrylic copolymers based on one or more acrylic monomers and one or more chlorinated monomers, a corrosion inhibiting pigment, and other conventional additives. As anti-corrosive pigments, mention is made of aluminium triphosphate, barium phosphate, zinc phosphate, phosphosilicates and ion exchanged pigments.

JP H07145340 (TEIKA CORP) 06.06.1995 is directed to a coating composition which can give a coating film endowed with improved heat discoloration resistance, said coating composition being prepared by using a vinyl chloride/ vinylidene chloride copolymer emulsion resin as the main resin component and adding thereto 3-35wt.%, based on the solids of the resin, mixture of aluminum dihydrogentri-polyphosphate or aluminum metaphosphate with at least one alkaline earth metal compound selected from the group consisting of magnesium oxide, calcium oxide and magnesium carbonate in a weight ratio of (100:1)-(1:1).

WO 2012/121760 (VALSPAR SOURCING, INC.) 13.09.2012 provides for a water-based coating and/or coating system effective for protecting metal-containing substrates, such as intermodal cargo containers, against corrosion that can be used to form sag resistant wet layers or coatings on a wide range of substrates. Binder is preferably a polyvinylidene chloride resin. One or more anticorrosive agents may be incorporated in the said coating composition, such as barium, calcium phosphosilicates, calcium titanate, calcium silicate, condensed calcium phosphate, aluminium triphosphate, and the like.

Nevertheless, in all the techniques of the prior art, multi-layer coating assemblies are taught as necessary for coping with the anti-corrosion requirements.

Indeed, multi-step coating adds complexity and duration of the corrosion-resistance coating forming process on the said large parts.

With increased environmental awareness, there is a strong desire to develop improved technology that would allow use of water-based coating systems to protect cargo containers or other substrates (e.g., vehicles such as rail cars or trucks) through application of thick coating layers in each coating pass, so as to reduce application duration and complexity, and possibly providing a ready-to-use corrosion protected part through one sole application step.

## Summary of invention

In one embodiment, the present invention provides a water-based coating composition that can be used to form thick coatings (exceeding 300 μm, preferably exceeding 400 μm) on metal surfaces through a single step application, with outstanding coating finish (no cracks) and suitable corrosion protection. The coating system is particularly effective for protecting metal-containing substrates, such as intermodal cargo containers, against corrosion.

The aqueous coating composition of the invention comprises:

- an aqueous latex of a copolymer consisting essentially of recurring units derived (i) from vinylidene chloride (VDC), (ii) from vinyl chloride (VC), (iii) from one or more than one alkyl (meth)acrylate having from 1 to 12 carbon atoms in the alkyl group [monomer (MA)] and (iv) from one or more than one aliphatic alpha-beta unsaturated carboxylic acids [monomer (AA)], the proportion of recurring units derived from monomer (AA) being of at least 1.0 wt %, with respect to the total weight of the copolymer [copolymer (A)], wherein:

  (A) the said copolymer (A) is stable against dehydrochlorination , in a manner such that the total chloride content of the solid residue of the aqueous latex, after thermal treatment at about 120°C for 2 hours, is of less than 1000 ppm, with respect to the total weight of the copolymer (A);
  (B) the said copolymer (A) does not to undergo any significant crystallization upon heating, in a manner such that the ratio of (j) its crystallinity index (CI) after a thermal treatment involving heating at 60°C for 48 hours to (jj) its crystallinity index before such thermal treatment ($CI_{after\ thermal\ treatment}/CI_{before\ thermal\ treatment}$) is less than 1.15; and

- at least one anti-corrosion pigment comprising an aluminium salt of a (poly)phosphoric acid modified with an alkaline earth metal oxide [pigment (P)];
- at least one non-ionic surfactant [surfactant (NS)]; and
- at least one inorganic filler [filler (I)] different from pigment (P), in an amount such that the overall pigment volume concentration (PVC), comprehensive of pigment (P) and filler (I), is comprised from 20 to 40 % vol., when determined with respect to the dried coating composition.

The Applicant has surprisingly found that by combining the aforementioned aqueous latex of copolymer (A), with the pigment (P), the surfactant (NS), the filler (I), so as to achieve the mentioned PVC, a coating composition is obtained which possesses a critical cracking film thickness of 300 μm or beyond, up to more than 500 μm, enabling expedite application of thick coating layers on metal surfaces, with good finish and good corrosion resistance.

## Description of embodiments

The coting composition of the invention is aqueous, that is to say that water is used as carrier. In addition to water, the aqueous carrier of the aqueous coating composition of the invention may optionally comprise one or more than one additional liquid co-carriers, in minor amount with respect to the water. Examples of co-carriers include water-miscible organic solvents, like notably butyl cellulose, alcohol(s) (e.g. butanol), alcohol esters, glycol ether(s) or ester(s) and combinations thereof.

Copolymer (A) consists essentially of recurring units derived (i) from vinylidene chloride (VDC), (ii) from vinyl chloride (VC), (iii) from one or more than one alkyl (meth)acrylate having from 1 to 12 carbon atoms in the alkyl group [monomer (MA)] and (iv) from one or more than one aliphatic alpha-beta unsaturated carboxylic acids [monomer (AA)], wherein:

(i) the amount of recurring units derived from VDC being of 50.0 to 90.0 % wt; preferably being of 65.0 to 85.0 % wt.;
(ii) the amount of recurring units derived from VC being of 5.0 to 30.0 % wt.; preferably being of 7.5 to 25.0 % wt.;
(iii) the amount of recurring units derived from monomer (MA) being of 2.0 to 25.0 % wt.; preferably being of 5.0 to 20.0 % wt.;
(iv) the amount of recurring units derived from monomer (AA) being of 1.0 to 3.0 % wt.; preferably being of 1.2 to 2.5 % wt.; with respect to the total weight of the copolymer.

The copolymer (A) essentially consists of above listed recurring units, that is to say that solely chain ends, defects or other polymerized impurities may be tolerated to the extent they do not modify the properties of the said copolymer (A).

Among suitable monomers (MA) which can be used in the copolymer (A), mention can be notably made of methyl acrylate, butyl acrylate, butyl methacrylate, 2-ethylhexyl acrylate, 2-ethylhexyl methacrylate. The preferred monomer (MA) is 2-ethylhexyl acrylate.

Monomer (AA) can be selected among acrylic acid, methacrylic acid, itaconic acid, and citraconic acid. It is nevertheless understood that acrylic acid will be generally preferred.

The copolymers (A) can be prepared by aqueous emulsion polymerization techniques, according to know methods.

The crystallinity index or CI, as defined in the present specification, is determined using infra-red spectroscopy by obtaining an attenuated total reflectance infra-red spectrum of the coated film. Crystallinity index may be measured using FTIR Spectrum One spectrophotometer from Perkin Elmer coupled with a μATP Split Pea unit from Harrick with a silicon microcrystal. Analogous procedure can be practiced using equally a germanium or a diamond crystal. In the method, a sample of the aqueous latex of copolymer (A) is dried at room temperature so as to prepare at least two film specimens having rectangular shape on suitable support materials. Film specimens for the determination of the $CI_{before}$ thermal $_{treatment}$ are submitted to IR-ATR determination as such, while film specimens for the determination of the $CI_{after\ thermal\ treatment}$ are submitted to a heat treatment in an air-ventilated oven at 60°C for 48 hours. The film specimen is placed in direct contact with the surface of the silicon crystal, with the copolymer (A)-coated side of the film against the crystal. At least three iterations are carried out on different parts of the specimen. The reference beam attenuator is set at 85% at 1150 $cm^{-1}$ and the sample is scanned between 950 $cm^{-1}$ and 1150 $cm^{-1}$ (at least 50 scans). The baseline absorbance, taken as background, is measured at 1120 $cm^{-1}$ ($A_{1120}$), and at the peaks, at 1040 $cm^{-1}$ ($A_{1040}$) and 1070 $cm^{-1}$ ($A_{1070}$), representative, respectively, of a reference peak for copolymer (A), independent from crystalline fraction, and of a crystalline phase-specific peak, are measured. Crystallinity index is calculated by dividing the difference between $A_{1042}$ and $A_{1120}$ by the difference between $A_{1070}$ and $A_{1120}$, according to the following formula:

$$CI = \frac{A_{1040} - A_{1120}}{A_{1070} - A_{1120}}$$

Determination is iterated at least twice, until results differing by less than 0.02 are obtained. Determinations on specimens before and after the above detailed thermal treatment enables determining the $CI_{after\ thermal\ treatment}/CI_{before\ thermal\ treatment}$ ratio, which is representative of the tendency of the copolymer (A) to undergo crystallization upon annealing, The higher the value, the higher being crystallization ability.

As said above, it is essential for the copolymer (A) not to undergo any significant crystallization such that the ratio of (j) its crystallinity index after thermal treatment involving heating at 60°C for 45 hours to (jj) its crystallinity index before such thermal treatment ($CI_{after\ thermal\ treatment}/CI_{before\ thermal\ treatment}$) is less than 1.15.

Generally, this ratio is of less than 1.10, even more preferably of less than 1.05. Optimal results have been obtained with aqueous latex of copolymer (A) wherein the $CI_{after\ thermal\ treatment}/CI_{before\ thermal\ treatment}$ ratio was found to be approximately 1.0.

This feature is essential for ensuring amorphous behaviour during the entire application and drying phase (generally occurring at temperatures higher than room temperature, e.g. about 50 °C), which ensure formation of a smooth and continuous film even at high thickness, with no crack nor defect.

Methods for adjusting the crystallization behaviour of copolymer (A) are known, and include adjustment of monomers' composition of the copolymer itself.

Commercial copolymer (A) latexes possessing such crystallization behaviour are available in the market.

As said, the said copolymer (A) is stable against dehydrochlorination , in a manner that the total chloride content of the solid residue of the aqueous latex, after thermal treatment at about 120°C for 2 hours, is of less than 1000 ppm, with respect to the total weight of the copolymer (A). When this property is not satisfied, chloride ions may interfere with coalescing behaviour and prevent formation of thick layers through one pass application.

Free chloride content of the aqueous latex of copolymer (A) is determined as follows; a specimen of the aqueous latex is dried at 105°C for about 4 hours, so as to obtain films from which specimens of 1x1.5 cm size are recovered. The said specimens are placed in glass tubes connected to bubblers containing ultra-pure water, and heat treated in an oven at about 120°C for 2 hours, under a nitrogen flow of 4 Nl/h. Bubblers are quickly deconnected from the system at the end of the heating cycle, and chloride content is dosed by titration with $Hg(NO_3)_2$, using bromophenol and diphenylcarbazone indicator. The result so obtained is expressed in ppm of chloride with respect to the weight of copolymer (A).

The total chloride content of the solid residue of the aqueous latex, after thermal treatment at about 120°C for 2 hours, is preferably of less than 950 ppm, more preferably of less than 900 ppm, even more preferably of less than 850 ppm, with respect to the total weight of the copolymer (A).

While resistance to dehydrochlorination of the aqueous coating composition as a whole may be increased by addition of HCl scavenger, it remains essential for the latex of copolymer (A) to inherently possess a low tendency to dehydrochlorination, which can be achieved through opportune tuning of latex manufacturing conditions and copolymer (A) composition.

The Applicant has indeed found that this resistance to dehydrochlorination synergistically contributes in the aqueous coating composition of the invention to providing coatings having improved critical coating film thickness, and outstanding corrosion resistance.

The aqueous latex has generally a copolymer (A) content of generally of at least 58 %wt., preferably of at least 59 % wt., with respect to the total weight of aqueous latex.

The aqueous coating composition of the invention comprises one or more than one anti-corrosion pigment comprising an aluminium salt of a (poly)phosphoric acid modified with an alkaline earth metal oxide [pigment (P)].

Pigment (P) may be selected from the group consisting of alkaline earth metal oxide modified aluminium tripolyphosphoric acid dihydrogen phosphate, aluminium metaphosphate and the like. The alkaline earth oxide modifier is generally MgO- or CaO-modification, achieved during the manufacture of the aluminium salt of the (poly)phosphoric acid.

A very useful pigment (P) is compound K-White 450H, which is a Mg-modified aluminium triphosphate.

Generally, pigment (P) is free from zinc; although Zn derivatives/modified compounds have been considered as particularly useful as ingredients in anti-corrosion paints, it has been found that the coating composition of the present invention is able to deliver outstanding corrosion protection, even without incorporation of Zn.

It is also known that Zn could be catalytically active with respect to the degradation of the copolymer (A), so that excluding this metal from the aqueous coating composition of the invention is advantageous.

Hence, the aqueous coating composition comprises generally no more than 1 % wt of Zn, preferably no more than 0.5 % wt, more preferably no more than 0.1 % wt of Zn, with respect to the total weight of the aqueous coating composition.

The aqueous coating composition of the invention comprises at least one non-ionic surfactant [surfactant (NS)].

Non-ionic non-fluorinated surfactants [surfactants (NS)] suitable for the invention are known in the art. Examples of suitable surfactants (NS) can be notably found in Nonionic Surfactants. Edited by SCHICK, M.J.. Marcel Dekker, 1967. p.76-85 and 103-141. In the rest of the text, the expressions "non-ionic non-fluorinated surfactant" and "surfactant (NS)" are understood, for the purposes of the present invention, both in the plural and the singular.

The surfactant (NS) of the invention is chosen preferably among those free from aromatic groups. It is well-known that non-ionic surfactants comprising aromatic moieties generally convert into harmful organic aromatic compounds (such as benzene, toluene or xylene) on thermal decomposition, during baking of the coating. Dispersions free from aromatic moieties containing surfactants are thus appreciated as more environmental friendly products.

The surfactant (NS) may be advantageously selected from the group consisting of alcohol polyethers comprising recurring units derived from ethylene oxide and/or propylene oxide.

The non-ionic surfactant of the invention advantageously complies with formula (I) here below:

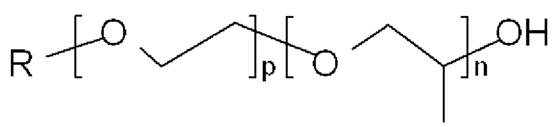

(I)

wherein R is a $C_1$-$C_{18}$ alkyl group, p and n, equal or different each other, can be zero or range between 3 and 24, with the proviso that at least one of p and n is different from zero.

According to certain embodiments, p and n are both different from zero, that is to say that the non-ionic surfactant comprises recurring units derived both from ethylene oxide and propylene oxide. Generally, according to these embodiments, the non-ionic surfactant possesses a block structure, comprising segregated sequences of ethylene oxide recurring units and segregated sequences of propylene oxide recurring units.

According to certain embodiments, the surfactant (NS) complies with formula (II) here below:

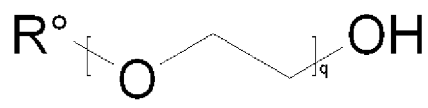

(II)

wherein R° is a $C_1$-$C_{15}$ alkyl group, and q ranges between 5 and 15.

The aqueous coating composition of the invention additionally comprises at least one filler (I) different from pigment (P), in an amount such that the PVC, as defined above, is between 20 to 40 % vol.

Particularly preferred are aqueous coating compositions wherein the PVC is of at least 25, preferably at least 27, and/or of at most 37, preferably of at most 35 % vol.

The filler (I) may have a variety of shapes, such as being platelet-shaped, acicular, oblong, rounded, spherical, irregular or combination of these.

Optimal loading of pigment (P) and filler (I) is generally believed to provide beneficial performance and application characteristics for the coating composition, Including preventing entrapment of air, moisture or gases which could otherwise produce air bubbles during application or blistering and peeling upon drying, and may contribute to impart tixotropic properties, reducing sagging of the wet coating.

Suitable fillers (I) which can be used include notably water insoluble compounds of one or more of Be, Mg, Ca, Sr, Ba, Al, Ti, transition metals, lanthanide metals, actinide metals, S, Ge, Ga, Sn, Pb, combination or mixtures of these and the like. Insoluble compounds include sulfates, hydroxides, carbides, nitrides, oxydes, oxynitrides, oxycarbides, silicate, modified silicates and carbonates.

The filler (I) may include platelet-shaped particles and/or non-platelet shaped (acicular, oblong, rounded, spherical, irregular or combination of these) particles.

Platelet particles have excellent thickening properties, provide excellent sag resistance, and are generally recognized as helping with air release. Examples of platelet-shaped fillers include one or more that one of a clay, such as china clay, mica, talc and combinations of these.

A wide variety of non-platelet shaped particles could be used in the aqueous coating composition of the invention, possibly in combination with platelet-shaped particles. Examples of these includes sulfates, carbides, nitrides, oxynitrides, oxycarbuides, oxides, carbonates of one or more than one of Be, Mg, Ca, Sr, Ba, Al, Ti, transition metals, lanthanide metals, actinide metals, S, Ge, Ga, Sn, Pb, combination or mixtures of these.

Still, metal oxide coloured pigments can be used as filler (I); exemplary metal oxides pigments include $Cr_2O_3$, $Al_2O_3$, $V_2O_3$, $Ga_2O_3$, $Fe_2O_3$, $Mn_2O_3$, $Ti_2O_3$, $In_2O_3$, $TiBO_3$, $NiTiO_3$, $MgTiO_3$, $CoTiO_3$, $ZnTiO_3$, $FeTiO_3$, $MnTiO_3$, $CrBO_3$, $NiCrO_3$, $FeBO_3$, $FeMnO_3$, $FeSn(BO_3)_2$, $AlBO_3$, $Mg_3Al_2Si_3O_{12}$, $NdAlO_3$, $LaAlO_3$, $MnSnO_3$, $LiNbO_3$, $LaCoO_3$, $MgSiO_3$, $ZnSiO_3$, $Mn(Sb,Fe)O_3$.

Apart from the latex of copolymer (A), pigment (P), surfactant (NS) and filler (I), the coating composition of the invention may also comprise one or more than one conventional additive and/or adjuvant known in the art. Examples thereof include, but are not limited to coalescents, thickeners, defoamers, stabilizers, wetting agents, preservatives, dispersing agents, flash rust inhibitors, biocides, fungicides, antistatic agents, pH regulators and viscosity modifiers.

A wide range of techniques may be used to manufacture the aqueous coating composition of the present invention. According to an illustrative technique, the latex of copolymer (A) is reserved, while the other ingredients are combined and mixed until homogeneous in an aqueous carrier. Then, the reserved latex is added to the admixture with further mixing until homogeneous.

The aqueous coating composition of the present invention can be used to coat a wide variety of substrates. Exemplary substrates include building's' elements, freight containers, flooring materials, walls, furniture's, motor vehicle components, laminates, equipment's components, appliances. Exemplary substrate materials include metals, metal alloys, intermetallic compositions, metal-containing composites. Exemplary metal and alloys include aluminium, steel, weathering steel and stainless steal.

The invention further pertains to a method for coating a substrate, as above detailed, comprising using the aqueous coating composition of the invention.

It may be desirable to preliminarily clean the substrate to remove grease, dirt and other contaminants.

The method of the invention advantageously comprises applying the aqueous coating composition, as above detailed, on at least a portion of the substrate surface, so as to form a wet coating.

The aqueous coating composition of the invention can be applied to the substrate using any suitable technique, such as by brushing, spraying, spin coating, roll coating, curtain coating, dipping, gravure coating.

The so-obtained wet coating is then dried so as to obtain a dried coating.

One or more additional coating layers of the aqueous composition of the invention can be applied, if desired. Nevertheless, thanks to the advantageous CCT of the aqueous coating composition of the invention, a single coat is sufficient for achieving coating thicknesses of 300 $\mu$m or more, also of 400 $\mu$m or more, and even of 500 $\mu$m or more.

The invention will now be described with reference to the following examples whose purpose is merely illustrative and not intended to limit the scope of the present invention.

**Raw materials:**

DIOFAN® P520 PVDC is an aqueous latex of a VDC/VC/2EHA/AA having a solid content of about 56 % wt, comprising an amount of AA equal to about 1.05 % wt.; this aqueous latex undergoes certain phenomena of dehydrochlorination, so that its free chloride content is generally beyond 1500 ppm; further, it undergoes recrystallization phenomena, leading to $CI_{after\ thermal\ treatment}/CI_{before\ thermal\ treatment}$ ratio of 1.43;

DIOFAN® P580 PVDC is an aqueous latex of a VDC/VC/2EHA/AA 68/22.25/8/1.75 on weight basis, having a solid content of about 60 % wt; this aqueous latex is particularly stable against dehydrochlorination, so that its free chlorine content is at any time below 1000 ppm; further, it does not undergo recrystallization phenomena, leading to $CI_{after\ thermal\ treatment}/CI_{before\ thermal\ treatment}$ ratio of about 1.0.

K White 84 is a Zn and $SiO_2$-modified aluminium triphosphate, an anti-corrosion pigment commercially available from Tayca Corporation, Osaka, Japan.

K White 450H is a Mg-modified aluminium triphosphate, an anti-corrosion pigment commercially available from Tayca Corporation, Osaka, Japan.

Bayferrox® 318M is a micronized iron oxide black pigment, commercially available from Lanxess;

Byk® 035 is a defoamer, commercially available from Byk Chemie, Wessel, Germany;

Byk® 151 is a solution of an alkylol ammonium salt surfactant of a polyfunctional polymer having anionic character, commercially available from Byk Chemie, Wessel, Germany.

Synperionic® PE F87 is a non-ionic surfactant based on an ethylene oxide/propylene oxide copolymer, possessing a HLB value of 24, a hydroxyl value of 14.6 mg KOH/g, and a pH of 6.75, commercially available from Uniqema, Gouda, The Netherlands;;

Texanol® is ester-alcohol (2,2,4-trimethyl-1,3-pentanediol monoisobutyrate), a coalescing agent commercially available from Eastmann

Proxel™ LV Preservative is a broad spectrum biocide for the preservation of industrial water-based products against spoilage from bacteria, yeasts and fungi, commercially available from Lonza.

Surfynol® 104E is a 50/50 wt/wt solution of 2,4,7,9-tetramethyl-5-decyne-4,7-diol in ethylene glycol, used as dispersing agent.

Luzenac® 10M0 is powdered talc, commercially available from IMERYS Talc.

**General procedure for preparing formulations**

A liquid base made of water, defoamer, dispersing agent(s) and stabilizer(s)/surfactant(s) was prepared by mixing all ingredients at room temperature for 5 minutes. Pigments and other inorganic fillers were next incorporated into the said liquid base through high speed mixing using a Cowles blade. The copolymer (VDC) aqueous latex was finally added, together with possibly additional ingredients, like coalescing agents, stabilizer(s)/surfactant(s), biocide, etc.. Details are provided in the Table below.

General coating procedure and determination of CCT (critical coating film thickness)

The so-obtained formulations were sprayed onto stainless steel plaques having size of 150 to 100 $mm^2$, using a compressed air Kremlin M 22G HPA gun, using an inlet pressure of 4 bars, and at a pulverization distance of 20 cm. The stainless steel plaques were kept horizontal and coating was realized at a flow angle of about 30° with respect to vertical.

The gun die was between 1.2 to 2.2 mm, adjusted as a function of the viscosity, so as to obtain a pulverization coating triangle covering the entire surface of the steel plaque. The coated layer was dried for 5 minutes at room temperature and next dried for additional 20 minutes under forced hot air circulation (T = 50°C; V = 5 m/sec).

Critical coating film thickness was determined through iterations, by checking after drying presence of mud cracks. In case no mud cracks were visible, spray coating was repeated increasing the coating thickness, until verifying mud crack failures.

**Comparative Example 1**

A mixture of water (16.63 weight parts), defoamer Byk® 035 (0.2 weight parts), dispersing agent Byk® 151 (0.52 weight parts), and a mixture of Surfynol® 104E and Synperionic® PE F87 surfactants (0.31 and 2.08 weight parts, respectively) was used as liquid base. Luzernac 10M0 (19.50 weight parts), K-white 84 (5.19 weight parts) and Bayferrox® 130M (3.12 weight parts) was dispersed therein and next complemented with 49.89 weight parts of DIOFAN® P580 latex, 0.49 weight parts of Texanol®, 0.97 weight parts of Synperionic® PE F87, 0.1 weight parts of Proxel™ LV and 0.99 weight parts of $NaNO_2$.

The PVC of this formulation was 30 % vol, density 1.43 g/l, with a solid contents of 59 % wt.

The viscosity of the formulation was 820 cP, its pH was 5.6 and its CCT was found to be of less than 90 μm.

This example demonstrates that a copolymer (A), although possessing all properties recited above, cannot deliver high CCT when formulated with an anticorrosion pigment which is not an alkaline earth-modified aluminium phosphate.

**Comparative Example 2**

A mixture of water (16.98 weight parts), defoamer Byk® 035 (0.2 weight parts), dispersing agent Byk® 151 (0.50 weight parts), Synperionic® PE F87 surfactants (2.00 weight parts) and AMP 95 neutralizer (0.50 weight parts) was used as liquid base. Luzernac® 10M0 (18.37 weight parts), K-white 450H (4.99 weight parts) and Bayferrox® 130M (1.50 weight parts) was dispersed therein and next complemented with 54.86 weight parts of DIOFAN® P520 latex.

Viscosity was adjusted through addition of a rheology modifier Rheolate 255 (0.1 weight parts).

The PVC of this formulation was 30 % vol, density 1.37 g/l, with a solid content of 57 % wt.

The viscosity of the formulation was 2000 cP, its pH was 7.27 and its CCT was found to be of less than 180 μm.

This example demonstrates that a copolymer (VDC) latex which fails to be very stable against dehydrochlorination and which hence comprises free chloride, and which have a tendency to crystallize under coalescing/heating conditions cannot deliver high CCT even when formulated with alkaline earth oxide-modified aluminium triphosphate anticorrosion pigment.

**Example 3**

A mixture of water (17.25 weight parts), defoamer Byk® 035 (0.2 weight parts), dispersing agent Byk® 151 (0.51 weight parts), and Synperionic® PE F87 surfactants (2.03 weight parts), and AMP 95 neutralizer (0.51 weight parts) was used as liquid base. Luzernac® 10M0 (20.05 weight parts), K-white 450H (5.07 weight parts) and Bayferrox® 130M (1.52 weight parts) was dispersed therein and next complemented with 52.76 weight parts of DIOFAN® P580 latex.

Viscosity was adjusted through addition of a rheology modifier Rheolate 255 (0.1 weight parts).

The PVC of this formulation was 30 % vol, density 1.39 g/l, with a solid content of 60 % wt.

The viscosity of the formulation was 3000 cP, its pH was 6.89 and its CCT was found to be of more than 500 μm.

This example demonstrates that a copolymer (VDC) latex is very stable against dehydrochlorination and which hence comprises free chlorine in amounts of less than 1000 ppm, and which does not crystallize under coalescing/heating conditions is able to deliver high CCT when formulated with alkaline earth oxide-modified aluminium triphosphate anticorrosion pigment.

## Claims

1. An aqueous coating composition comprising:

   - an aqueous latex of a copolymer consisting essentially of recurring units derived (i) from vinylidene chloride (VDC), (ii) from vinyl chloride (VC), (iii) from one or more than one alkyl (meth)acrylate having from 1 to 12 carbon atoms in the alkyl group [monomer (MA)] and (iv) from one or more than one aliphatic alpha-beta unsaturated carboxylic acids [monomer (AA)], the proportion of recurring units derived from monomer (AA) being of at least 1.0 wt %, with respect to the total weight of the copolymer [copolymer (A)],
   wherein:

     (A) the said copolymer (A) is stable against dehydrochlorination , in a manner such that the total chloride content of the solid residue of the aqueous latex, after thermal treatment at 120°C for 2 hours, is of less than 1000 ppm, with respect to the total weight of the copolymer (A), whereby the stability against dehydrochlorination is measured in accordance with the specific method detailed in the description;
     (B) the said copolymer (A) does not to undergo any significant crystallization upon heating, in a manner such that the ratio of (j) its crystallinity index (CI), determined using infra-red spectroscopy by obtaining an attenuated total reflectance infra-red spectrum of the coated film, after a thermal treatment involving heating at 60°C for 48 hours to (jj) its crystallinity index before such thermal treatment ($CI_{after\ thermal\ treatment}/CI_{before\ thermal\ treatment}$) is less than 1.15, whereby the resistance against crystallization upon heating is measured in accordance with the specific method detailed in the description; and

   - at least one anti-corrosion pigment comprising an aluminium salt of a (poly)phosphoric acid modified with an alkaline earth metal oxide [pigment (P)];
   - at least one non-ionic surfactant [surfactant (NS)]; and
   - at least one inorganic filler [filler (I)] different from pigment (P), in an amount such that the overall pigment volume concentration (PVC), comprehensive of pigment (P) and filler (I), is comprised from 20 to 40 % vol., when determined with respect to the dried coating composition.

2. The aqueous coating composition of Claim 1, wherein, in copolymer (A):

   (i) the amount of recurring units derived from VDC is of 50.0 to 90.0 % wt; preferably being of 65.0 to 85.0 % wt.;
   (ii) the amount of recurring units derived from VC is of 5.0 to 30.0 % wt.; preferably being of 7.5 to 25.0 % wt.;
   (iii) the amount of recurring units derived from monomer (MA) is of 2.0 to 25.0 % wt.; preferably being of 5.0 to 20.0 % wt.;
   (iv) the amount of recurring units derived from monomer (AA) is of 1.0 to 3.0 % wt.; preferably being of 1.2 to 2.5 % wt.;

   with respect to the total weight of the copolymer.

3. The aqueous coating composition of claims 1 or 2, wherein monomer (MA) is selected from the group consisting of methyl acrylate, butyl acrylate, butyl methacrylate, 2-ethylhexyl acrylate, 2-ethylhexyl methacrylate, with 2-ethylhexyl acrylate being preferred.

4. The aqueous coating composition of claims 1 or 3, wherein monomer (AA) is selected among acrylic acid, methacrylic acid, itaconic acid, and citraconic acid, and it is preferably acrylic acid.

5. The aqueous coating composition of anyone of the preceding claims, wherein pigment (P) is selected from the group consisting of alkaline earth metal oxide modified aluminium tripolyphosphoric acid dihydrogen phosphate or aluminium metaphosphate.

6. The aqueous coating composition of anyone of the preceding claims, wherein the aqueous coating composition comprises no more than 1 % wt of Zn, preferably no more than 0.5 % wt, more preferably no more than 0.1 % wt of Zn, with respect to the total weight of the aqueous coating composition.

7. The aqueous coating composition of anyone of the preceding claims, wherein the surfactant (NS) of the invention is chosen among those free from aromatic groups, and is preferably selected from the group consisting of alcohol polyethers comprising recurring units derived from ethylene oxide and/or propylene oxide.

8. The aqueous coating composition of anyone of the preceding claims, wherein the filler (I) includes platelet-shaped particles and/or non-platelet shaped particles, such as oblong, rounded, spherical, irregular or a combination of these.

9. The aqueous coating composition of claim 8, wherein platelet-shaped fillers include one or more than one of a clay, such as china clay, mica, talc, and a combination of these.

**10.** A method for manufacturing the aqueous coating composition of anyone of claims 1 to 9, said method comprising the following steps:

(i) the latex of copolymer (A) is reserved, while the other ingredients are combined and mixed until homogeneous in an aqueous carrier;
(ii) then, the reserved latex is added to the admixture with further mixing until homogeneous.

**11.** A method for coating a substrate comprising using the aqueous coating composition of anyone of claims 1 to 9.

**12.** The method of claim 11, wherein the substrates include buildings' elements, freight containers, flooring materials, walls, furniture's, motor vehicle components, laminates, equipment's components, appliances.

**13.** The method of claim 11 or 12, wherein substrate materials include metals, metal alloys, intermetallic compositions, metal-containing composites.

**14.** The method of anyone of claims 11 to 13, said method comprising applying the aqueous coating composition on at least a portion of the substrate surface, so as to form a wet coating; and drying the wet coating so as to obtain a dried coating.

**15.** The method of claim 14, wherein the aqueous coating composition is applied to the substrate using a technique selected from the group consisting of brushing, spraying, spin coating, roll coating, curtain coating, dipping, and gravure coating.

## Patentansprüche

**1.** Wässrige Beschichtungszusammensetzung, umfassend:

- einen wässrigen Latex eines Copolymers, der im Wesentlichen aus wiederkehrenden Einheiten besteht, die (i) von Vinylidenchlorid (VDC), (ii) von Vinylchlorid (VC), (iii) von einem oder mehr als einem Alkyl(meth)acrylat mit 1 bis 12 Kohlenstoffatomen in der Alkylgruppe [Monomer (MA)] und (iv) von einer oder mehr als einer aliphatischen, alpha-beta-ungesättigten Carbonsäure [Monomer (AA)] abgeleitet sind, wobei der Anteil der wiederkehrenden Einheiten, die von Monomer (AA) abgeleitet sind, mindestens 1,0 Gew.-%, bezogen auf das Gesamtgewicht des Copolymers [Copolymer (A)], beträgt, wobei:

(A) das Copolymer (A) gegen Dehydrochlorierung stabil ist, derart, daß der Gesamtchloridgehalt des festen Rückstandes des wäßrigen Latex nach thermischer Behandlung bei 120 °C für 2 Stunden weniger als 1000 ppm, bezogen auf das Gesamtgewicht des Copolymers (A), beträgt, wobei die Stabilität gegen Dehydrochlorierung gemäß dem in der Beschreibung angegebenen spezifischen Verfahren gemessen wird;
(B) das Copolymer (A) beim Erhitzen keine signifikante Kristallisation erfährt, derart, daß das Verhältnis von (j) seinem Kristallinitätsindex (CI), bestimmt unter Verwendung von Infrarotspektroskopie durch Erhalten eines abgeschwächten Totalreflexions-Infrarotspektrums des beschichteten Films, nach einer thermischen Behandlung, die ein Erhitzen bei 60 °C für 48 Stunden beinhaltet, zu (jj) seinem Kristallinitätsindex vor einer solchen thermischen Behandlung ($CI_{nach\ der\ thermischen\ Behandlung}/CI_{vor\ der\ thermischen\ Behandlung}$) weniger als 1,15 beträgt, wobei der Widerstand gegen Kristallisation beim Erhitzen gemäß dem spezifischen Verfahren, das in der Beschreibung detailliert beschrieben ist, gemessen wird; und

- mindestens ein Korrosionsschutzpigment, umfassend ein Aluminiumsalz einer mit einem Erdalkalimetalloxid modifizierten (Poly)phosphorsäure [Pigment (P)];
- mindestens ein nichtionisches Tensid [Tensid (NS)]; und
- mindestens einen anorganischen Füllstoff [Füllstoff (I)], der von Pigment (P) verschieden ist, in einer solchen Menge, dass die Gesamtpigmentvolumenkonzentration (PVC), die Pigment (P) und Füllstoff (I) umfasst, 20 bis 40 Vol.-% umfasst, wenn sie in Bezug auf die getrocknete Beschichtungszusammensetzung bestimmt wird.

**2.** Wässrige Beschichtungszusammensetzung nach Anspruch 1, wobei in Copolymer (A):

(i) die Menge an von VDC abgeleiteten wiederkehrenden Einheiten 50,0 bis 90,0 Gew.-%; bevorzugt 65,0 bis 85,0 Gew.-% beträgt;
(ii) die Menge an von VC abgeleiteten wiederkehrenden Einheiten 5,0 bis 30,0 Gew.-%; bevorzugt 7,5 bis 25,0 Gew.-% beträgt;
(iii) die Menge an von Monomer (MA) abgeleiteten wiederkehrenden Einheiten 2,0 bis 25,0

Gew.-%; bevorzugt 5,0 bis 20,0 Gew.-% beträgt; (iv) die Menge an von Monomer (AA) abgeleiteten wiederkehrenden Einheiten 1,0 bis 3,0 Gew.-%, bevorzugt 1,2 bis 2,5 Gew.-%, bezogen auf das Gesamtgewicht des Copolymers, beträgt.

**3.** Wässrige Beschichtungszusammensetzung nach Ansprüchen 1 oder 2, wobei das Monomer (MA) aus der Gruppe ausgewählt ist, die aus Methylacrylat, Butylacrylat, Butylmethacrylat, 2-Ethylhexylacrylat, 2-Ethylhexylmethacrylat besteht, wobei 2-Ethylhexylacrylat bevorzugt ist.

**4.** Wässrige Beschichtungszusammensetzung nach Ansprüchen 1 oder 3, wobei das Monomer (AA) aus Acrylsäure, Methacrylsäure, Itaconsäure und Citraconsäure ausgewählt ist, und es bevorzugt Acrylsäure ist.

**5.** Wässrige Beschichtungszusammensetzung nach einem der vorhergehenden Ansprüche, wobei das Pigment (P) aus der Gruppe ausgewählt ist, die aus Erdalkalimetalloxid modifiziertem Aluminiumtripolyphosphorsäuredihydrogenphosphat oder Aluminiummetaphosphat besteht.

**6.** Wässrige Beschichtungszusammensetzung nach einem der vorhergehenden Ansprüche, wobei die wässrige Beschichtungszusammensetzung nicht mehr als 1 Gew.-% Zn, bevorzugt nicht mehr als 0,5 Gew.-%, stärker bevorzugt nicht mehr als 0,1 Gew.-% Zn, bezogen auf das Gesamtgewicht der wässrigen Beschichtungszusammensetzung, enthält.

**7.** Wässrige Beschichtungszusammensetzung nach einem der vorhergehenden Ansprüche, wobei das erfindungsgemäße Tensid (NS) aus der Gruppe der aromatengruppenfreien Tenside ausgewählt ist, bevorzugt aus der Gruppe der Alkoholpolyether, die von Ethylenoxid und/oder Propylenoxid abgeleitete wiederkehrende Einheiten umfassen.

**8.** Wässrige Beschichtungszusammensetzung nach einem der vorhergehenden Ansprüche, wobei der Füllstoff (I) plättchenförmige Partikel und/oder nicht plättchenförmige Partikel, die z. B. länglich, rund, kugelförmig, unregelmäßig oder eine Kombination davon sind, enthält.

**9.** Wässrige Beschichtungszusammensetzung nach Anspruch 8, wobei die plättchenförmigen Füllstoffe einen oder mehrere von einem Ton, wie z. B. Kaolin, Glimmer, Talkum und eine Kombination von diesen enthalten.

**10.** Verfahren zum Herstellen der wässrigen Beschichtungszusammensetzung nach einem der Ansprüche 1 bis 9, wobei das Verfahren die folgenden Schritte umfasst:

(i) der Latex des Copolymers (A) wird zurückbehalten, während die anderen Bestandteile kombiniert und in einem wässrigen Träger bis zur Homogenität gemischt werden;
(ii) dann wird der zurückbehaltene Latex unter weiterem Mischen der Mischung zugegeben, bis sie homogen ist.

**11.** Verfahren zum Beschichten eines Substrats, umfassend das Verwenden der wässrigen Beschichtungszusammensetzung nach einem der Ansprüche 1 bis 9.

**12.** Verfahren nach Anspruch 11, wobei die Substrate Gebäudeelemente, Frachtcontainer, Bodenbeläge, Wände, Möbel, Kraftfahrzeugteile, Laminate, Ausrüstungskomponenten und Geräte enthalten.

**13.** Verfahren nach Anspruch 11 oder 12, wobei die Substratmaterialien Metalle, Metalllegierungen, intermetallische Zusammensetzungen, metallhaltige Verbundwerkstoffe enthalten.

**14.** Verfahren nach einem der Ansprüche 11 bis 13, wobei das Verfahren das Auftragen der wässrigen Beschichtungszusammensetzung auf mindestens einen Teil der Substratoberfläche umfasst, so dass eine nasse Beschichtung gebildet wird; und das Trocknen der nassen Beschichtung, so dass eine getrocknete Beschichtung erhalten wird.

**15.** Verfahren nach Anspruch 14, wobei die wässrige Beschichtungszusammensetzung auf das Substrat unter Verwendung einer Technik aufgetragen wird, die aus der Gruppe ausgewählt ist, die aus Streichen, Sprühen, Schleuderbeschichten, Walzenbeschichten, Vorhangbeschichten, Tauchen und Tiefdruckbeschichten besteht.

## Revendications

**1.** Composition aqueuse de revêtement comprenant :

- un latex aqueux d'un copolymère constitué essentiellement de motifs répétitifs issus (i) de chlorure de vinylidène (VDC), (ii) de chlorure de vinyle (VC), (iii) d'un ou de plus d'un (méth)acrylate d'alkyle possédant de 1 à 12 atomes de carbone dans le groupe alkyle [monomère (MA)] et (iv) d'un ou de plus d'un acide carboxylique aliphatique alpha-bêta insaturé [monomère (AA)], la proportion de motifs répétitifs issus du monomère (AA) étant d'au moins 1,0 % en poids, par rapport au poids total du

copolymère [copolymère (A)],

(A) ledit copolymère (A) étant stable vis-à-vis d'une déshydrochloration, d'une manière telle que la teneur totale en chlorures du résidu solide du latex aqueux, après un traitement thermique à 120 °C pendant 2 heures, soit inférieure à 1 000 ppm, par rapport au poids total du copolymère (A), la stabilité vis-à-vis de la déshydrochloration étant mesurée conformément au procédé spécifique détaillé dans la description ;
(B) ledit copolymère (A) ne subissant aucune cristallisation significative lors d'un chauffage, d'une manière telle que le rapport de (j) son indice de cristallinité (CI), déterminé à l'aide de spectroscopie infrarouge en obtenant un spectre infrarouge à réflectance totale atténuée du film revêtu, après un traitement thermique impliquant un chauffage à 60 °C pendant 48 heures sur (jj) son indice de cristallinité avant un tel traitement thermique ($CI_{\text{après traitement thermique}}/CI_{\text{avant traitement thermique}}$) soit inférieur à 1,15, la résistance vis-à-vis de la cristallisation lors d'un chauffage étant mesurée conformément au procédé spécifique détaillé dans la description ; et

- au moins un pigment anti-corrosion comprenant un sel d'aluminium d'un acide (poly)phosphorique modifié avec un oxyde de métal alcalino-terreux [pigment (P)] ;
- au moins un tensioactif non ionique [tensioactif (NS)] ; et
- au moins une charge inorganique [charge (I)] différente du pigment (P), en une quantité telle que la concentration volumique de pigment globale (PVC), incluant le pigment (P) et la charge (I), soit comprise entre 20 et 40 % en volume, lorsqu'elle est déterminée par rapport à la composition de revêtement séchée.

**2.** Composition aqueuse de revêtement selon la revendication 1, dans laquelle, dans le copolymère (A) :

(i) la quantité de motifs répétitifs issus de VDC est de 50,0 à 90,0 % en poids ; préférablement de 65,0 à 85,0 % en poids ;
(ii) la quantité de motifs répétitifs issus de VC est de 5,0 à 30,0 % en poids ; préférablement de 7,5 à 25,0 % en poids ;
(iii) la quantité de motifs répétitifs issus du monomère (MA) est de 2,0 à 25,0 % en poids ; préférablement de 5,0 à 20,0 % en poids ;
(iv) la quantité de motifs répétitifs issus du monomère (AA) est de 1,0 à 3,0 % en poids ; préférablement de 1,2 à 2,5 % en poids ;

par rapport au poids total du copolymère.

**3.** Composition aqueuse de revêtement selon la revendication 1 ou 2, le monomère (MA) étant choisi dans le groupe constitué par l'acrylate de méthyle, l'acrylate de butyle, le méthacrylate de butyle, l'acrylate de 2-éthylhexyle, le méthacrylate de 2-éthylhexyle ; l'acrylate de 2-éthylhexyle étant préféré.

**4.** Composition aqueuse de revêtement selon la revendication 1 ou 3, le monomère (AA) étant choisi parmi l'acide acrylique, l'acide méthacrylique, l'acide itaconique, et l'acide citraconique, et étant préférablement l'acide acrylique.

**5.** Composition aqueuse de revêtement selon l'une quelconque des revendications précédentes, le pigment (P) étant choisi dans le groupe constitué par le dihydrogénophosphate d'acide tripolyphosphorique d'aluminium modifié par un oxyde de métal alcalino-terreux et le métaphosphate d'aluminium.

**6.** Composition aqueuse de revêtement selon l'une quelconque des revendications précédentes, la composition aqueuse de revêtement ne comprenant pas plus de 1 % en poids de Zn, préférablement pas plus de 0,5 % en poids, plus préférablement pas plus de 0,1 % en poids de Zn, par rapport au poids total de la composition aqueuse de revêtement.

**7.** Composition aqueuse de revêtement selon l'une quelconque des revendications précédentes, le tensioactif (NS) de l'invention étant choisi parmi ceux sans groupes aromatiques, et étant préférablement choisi dans le groupe constitué par des polyéthers d'alcool comprenant des motifs répétitifs issus de l'oxyde d'éthylène et/ou de l'oxyde de propylène.

**8.** Composition aqueuse de revêtement selon l'une quelconque des revendications précédentes, la charge (I) comportant des particules en forme de plaquettes et/ou des particules non en forme de plaquettes, telles qu'oblongues, arrondies, sphériques, irrégulières ou une combinaison de celles-ci.

**9.** Composition aqueuse de revêtement selon la revendication 8, les charges en forme de plaquettes comportant l'un ou plus d'un parmi une argile, telle qu'un kaolin, un mica, un talc, et une combinaison de ceux-ci.

**10.** Procédé pour la fabrication de la composition aqueuse de revêtement selon l'une quelconque des revendications 1 à 9, ledit procédé comprenant les étapes suivantes :

(i) le latex de copolymère (A) est réservé, tandis

que les autres ingrédients sont combinés et mélangés jusqu'à être homogènes dans un support aqueux ;
(ii) puis, le latex réservé est ajouté au mélange en mélangeant davantage jusqu'à être homogène.

**11.** Procédé pour le revêtement d'un substrat comprenant l'utilisation de la composition aqueuse de revêtement selon l'une quelconque des revendications 1 à 9.

**12.** Procédé selon la revendication 11, les substrats comprenant des éléments de bâtiment, des conteneurs de fret, des matériaux de revêtement de sol, des parois, des meubles, des composants de véhicule à moteur, des stratifiés, des composants d'équipement, des appareils.

**13.** Procédé selon la revendication 11 ou 12, des matériaux de substrat comprenant des métaux, des alliages métalliques, des compositions intermétalliques, des composites contenant un métal.

**14.** Procédé selon l'une quelconque des revendications 11 à 13, ledit procédé comprenant l'application de la composition aqueuse de revêtement sur au moins une partie de la surface du substrat, de sorte à former un revêtement humide ; et le séchage du revêtement humide de sorte à obtenir un revêtement séché.

**15.** Procédé selon la revendication 14, la composition aqueuse de revêtement étant appliquée au substrat à l'aide d'une technique choisie dans le groupe constitué par le brossage, la pulvérisation, le revêtement par centrifugation, le revêtement au rouleau, le revêtement au rideau, le trempage, et le revêtement par gravure.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007079757 A
- JP H07145340 A
- WO 2012121760 A


### Non-patent literature cited in the description


- Nonionic Surfactants. Marcel Dekker, 1967, 76-85, 103-141